# EUROPÄISCHE PATENTSCHRIFT

(11) **EP 0 470 464 B1**
(45) Veröffentlichungstag und Bekanntmachung des Hinweises auf die Patenterteilung: **01.03.1995**
(21) Anmeldenummer: 91112638.1
(22) Anmeldetag: 27.07.1991
(51) Int. Cl.: C08G 73/16, C08G 73/14

(54) **Transparente, thermoplastische Polyetheresteramidimid-Elastomere sowie ihre Verwendung zur Herstellung von medizinischen Gebrauchsartikeln**
Transparent thermoplastic polyetheresteramideimide elastomers and their use for producing medicinal articles
Elastomères de polyétheresteramideimides transparents et thermoplastiques, ainsi que leur utilisation pour la préparation d'articles médicinaux

(30) Priorität: 10.08.1990 DE 4025346
(43) Veröffentlichungstag der Anmeldung: 12.02.1992
(73) Patentinhaber: BAYER AG, 51368 Leverkusen (DE)
(72) Erfinder: Dujardin, Ralf, Dr., W-4150 Krefeld 1 (DE); Dhein, Rolf, Dr., W-4150 Krefeld 1 (DE)

(56) Entgegenhaltungen:
- EP-A- 0 163 518
- EP-A- 0 230 547
- EP-A- 0 270 788

## Beschreibung

Die Erfindung betrifft transparente, thermoplastische Polyetheresteramidimid-Elastomere sowie ihre Verwendung zur Herstellung von medizinischen Gebrauchsartikeln.

Viele thermoplastische Elastomere (TPE), vor allen Dingen Polyurethane, werden in der Medizin eingesetzt. Die Anforderung an ein solches TPE für medizinische Zwecke ist neben den allgemeinen Grundcharakteristika (Elastizität, Verformungsbeständigkeit, Flexibilität, Beständigkeit gegen Sterilisation) in vielen Anwendungsbereichen die Transparenz. Weiterhin müssen solche Materialien ungiftig sein.

Thermoplastische Polyurethane aus aliphatischen, 1-ω-Dihydroxypolyether und aromatischen Diisocyanaten erfüllen die meisten der obengenannten Kriterien. Sie zeigen aber eine geringe thermische Stabilität. Die thermische Degradation von aromatischen Polyurethanen beginnt bereits bei Verarbeitungstemperaturen und wird durch Spuren an Feuchtigkeit sowie durch Verunreinigungen zusätzlich beschleunigt (siehe beispielsweise M. Szycher, V.L. Poirier und D.J. Dempsey in Journal Elastomer Plasts, Vol. 15, Seite 83, 1983). Solche Polyurethane neigen daher zu Metaboliten wie aromatischen Diaminen, die im Tierversuch als hoch toxisch eingestuft werden. Weiterhin ist die Transparenz dieser Materialien nicht optimal.

Die Aufgabe bestand darin, thermoplastische verarbeitbare, transparente Polymere für medizinische Anwendungen zu entwickeln, die ein entsprechendes elastomeres Verhalten wie die Polyurethane aufweisen, aber thermisch stabiler sind.

Im Dokument EP-A-0 163 518 werden Poly(esterimide) beansprucht. Sie wurden jedoch mittels aromatischer Diamine hergestellt. Es besteht weiterhin kein Hinweis auf medizinische Anwendungen.

Überraschenderweise wurde nun gefunden, daß die neue Polymerklasse der Polyesteretheramidimide vergleichbar gute elastische Eigenschaften wie elastomere Polyurethane aufweisen und sich zusätzlich durch eine hervorragende Transparenz auszeichnen.

Gegenstand der vorliegenden Erfindung sind daher thermoplastische, elastomere und transparente Polyetheresteramidimide (PEEAI) der Formel 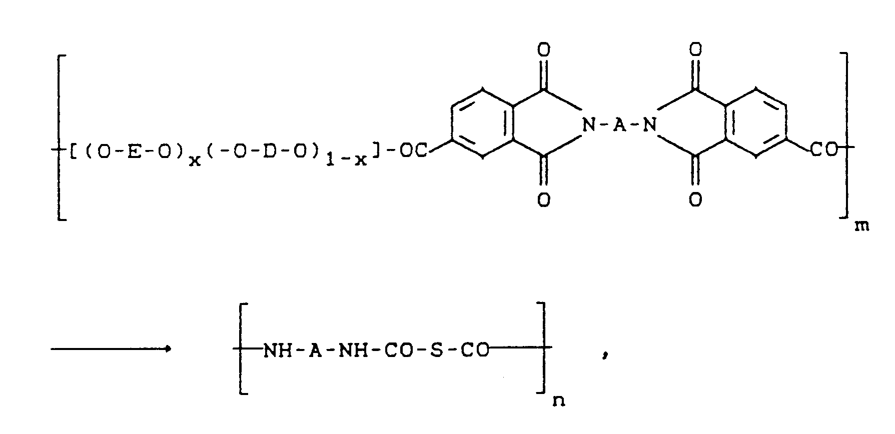
worin
- A: einen divalenten Rest eines aliphatischen oder cycloaliphatischen Diamins mit 1 bis 25 Kohlenstoffatomen darstellt,
- E: für einen divalenten Rest eines aliphatischen 1,ω-Dihydroxypolyethers mit Molekulargewichten von 400 bis 2500 g/Mol steht,
- D: einen divalenten Rest einer aliphatischen oder cycloaliphatischen 1,ω-Dihydroxyverbindung mit 2 bis 15 Kohlenstoffatomen bedeutet,
- S: für einen divalenten Rest einer aliphatischen, cycloaliphatischen oder aromatischen Dicarbonsäure mit 5 bis 43 Kohlenstoffatomen steht, mit der Maßgabe, daß x im Bereich von 0,1 bis 0,9, bevorzugt 0,3 bis 0,7 liegt, daß Molverhältnis von Imid- zu Amidstruktur (m:n) größer als 2:1 ist und das durch Lichtstreuung absolut bestimmte mittlere Gewichtsmolekulargewicht (M_{w}) Werte von 20 000 bis 200 000 besitzt.

Transparente, elastische Polyetheresteramidimide entsprechen der vorliegenden Erfindung werden erhalten, wenn das Molverhältnis von Imid- zu Amidstruktur (m:n) größer als 2:1, bevorzugt 2:1 bis 20:1, ist. Polymere mit einem Molverhältnis von Imid- zu Amidstruktureinheiten von m:n kleiner 2:1 oder größer als 25:1 erfüllen nicht mehr den Anspruch der Transparenz.

Geeignete Diamine, die alleine oder in Kombination zur Herstellung des divalenten A-Restes eingesetzt werden können, sind primäre aliphatisch oder cycloaliphatische Diamine mit 1 bis 25, bevorzugt 2 bis 15 Kohlenstoffatomen, wie 1,4-Diaminobutan, 1,6-Diaminohexan, 1,4-Diamino-cyclohexan, 5-Amino-1-amino-methyl-1,3,3-trimethylcyclohexan, Bis-(4-aminocyclohexyl)-methan und Bis-(4-amino-3-methyl-cyclohexyl)-methan. Bevorzugte Diamine sind 1,6-Diaminohexan, 5-Amino-1-aminomethyl-1,3,3-trimethylcyclohexan und Bis-(4-aminocyclohexyl)-methan.

1,ω-Dihydroxypolyether mit einem Molekulargewicht von 400 bis 2500 bevorzugt 650 bis 2000 g/Mol, die zur Erzeugung des divalenten E-Restes alleine oder auch in Kombination verschiedener Typen oder gleicher Typen in unterschiedlichen Molekulargewichten eingesetzt werden können, sind beispielsweise 1,ω-Dihydroxypoly(ethylenoxid), 1,ω-Dihydroxy-poly(1,3-propylenoxid), 1,ω-Dihydroxypoly(tetra-methylenoxid), statistische oder blockartige Copolymere von Ethylen-und 1,2-Propylenoxid sowie statistische und blockartige Copolymer von Tetrahydrofuran mit Ethylen-oder Propylenoxid. Bevorzugte 1,ω-Dihydroxypolyether sind 1,ω-Dihydroxy-poly(tetramethylenoxid) mit Molekulargewichten von 650 bis 2000 g/Mol sowie Copolymere aus Ethylenoxid und Tetrahydrofuran mit Molekulargewichten bis 1500 g/Mol und einem Ethylenoxidgehalt kleiner 20 %.

Die zur Generierung des divalenten D-Restes geeigneten 1,ω-aliphatischen oder cycloaliphatischen 1,ω-Dihydroxyverbindungen mit 2 bis 15 Kohlenstoffatomen sind beispielsweise 1,2-Dihydroxyethan, 1,3-Dihydroxypropan, 1,4-Dihydroxybutan, 1,4-Dihydroxy-but-2-en, 1,6-Dihydroxyhexan, 1,4-Dihydroxycyclohexan und/oder 1,4-Bis(hydroxymethyl)cyclohexan. Bevorzugte 1,ω-Dihydroxyverbindungen sind 1,3-Dihydroxypropan, 1,4-Dihydroxybutan und 1,4-Bis(hydroxymethyl)cyclohexan alleine oder auch im Gemisch untereinander.

Zur Herstellung des divalenten S-Restes mit 4 bis 43, bevorzugt 6 bis 30 Kohlenstoffatomen können beispielsweise als aliphatische Dicarbonsäuren Bernsteinsäure und/oder Adipinsäure und als cycloaliphatische Dicarbonsäure Hexahydroterephthalsäure eingesetzt werden. Als aromatische Dicarbonsäuren kommen Verbindungen der nachstehenden Formeln in Betracht: 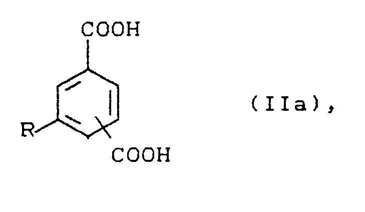
worin
- R: für Wasserstoff, SO₃H, NO₂ oder OH steht
oder 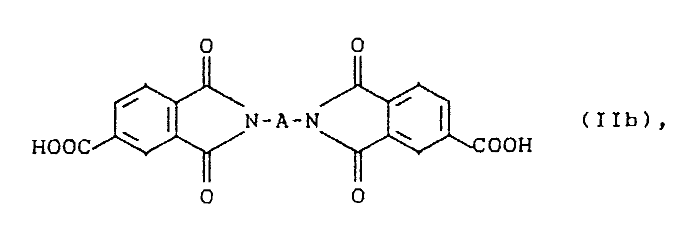
worin
- A: die in der obigen allgemeinen Formel angegebene Bedeutung hat.

Die Menge an zugesetzter Dicarbonsäure richtet sich nach dem gewünschten Anteil an Amidstrukturen im erfindungsgemäßen Polymeren. Üblicherweise werden an Dicarbonsäure eingesetzt 0,05 bis 0,5 Mol pro 2 Mol an Trimellithsäureimideinheiten.

Weiterhin ist es möglich, die obengenannten divalenten Reste durch trivalente- oder multivalente Reste als Kettenverzweiger teilweise zu ersetzen. Üblicherweise werden die Kettenverzweiger in Mengen von 0,01 bis 5,0 Gew.-%, eingesetzt. Als Kettenverzweiger kommen beispielsweise in Frage: Trimellithsäure, Trimesinsäure, Pentaerythrit und Trimethylolpropan.

Ein mittleres Gewichtsmolekulargewicht M_{w} von 20 000 bis 200 000, bevorzugt 20 000 bis 150 000 g/Mol (bestimmt durch Lichtstreuung) kann bei den transparenten, elastischen Polyetheresteramidimiden der vorliegenden Erfindung gegebenenfalls durch Zugabe eines Kettenabbrechers eingestellt werden. Geeignete Kettenabbrecher sind beispielsweise monofunktionelle, niedermolekulare Alkohole, Amine oder Carbonsäuren mit einem Siedepunkt oberhalb 200°C, wie Nonanol, Dekanol, Dodekanol, Stearylalkohol oder Nonylamin, Decylamin, Dodecylamin, Stearylamin, Nonancarbonsäure, Dekancarbonsäure, Dodekancarbonsäure und/oder Stearinsäure.

Die Polymere der vorliegenden Erfindung können leicht durch Schmelzekondensationsverfahren hergestellt werden. In einem typischen Herstellungsverfahren wird eine Diimiddicarbonsäure entsprechend Formel (IIb) oder die entsprechenden Vorprodukte (Trimellithsäure-anhydrid und Diamin im Verhältnis von 2:1) zusammen mit dem gewünschten Anteil an 1,ω-Dihydroxypolyether, einer äquimolaren Menge an einer weiteren Dicarbonsäure (oder der gleichen Diimiddicarbonsäure) und Diamin sowie einem zwei- bis zwanzigfachen molaren Überschuß an 1,ω-Dihydroxyverbindung in Gegenwart eines Metallkatalysators bei Raumtemperatur in einer Stickstoffatmosphäre zusammengegeben. Die Reaktionsmischung wird bei Temperaturen von ca. 180 bis 220°C homogen und rührbar. Anschließend wird die Temperatur langsam auf ca. 240 bis 280°C gesteigert, wobei die Polymerisation beginnt und flüchtige Produkte abdestillieren. Nachdm die Hauptmenge an Reaktionswasser und überschüssiger 1,ω-Dihydroxyverbindung abdestilliert ist, wird der Druck sukzessive auf ca. 10 mbar reduziert. Dabei wird die rührbare dünnflüssige Reaktionsmischung zunehmend hochviskoser, wobei sich die Arbeitsaufnahme des Rührers erhöht.

Die Herstellung der Diimiddicarbonsäure erfolgt besonders leicht, indem man 2 Mol Trimellithsäure pro Mol Diamin in einem geeigneten Lösungsmittel wie Dimethylformamid oder Essigsäure unter Rückfluß reagieren läßt.

Besonders einfach gestaltet sich die Synthese der erfindungsgemäßen Polyetheresteramidimide, wenn die Diimiddicarbonsäuren in situ bei der Schmelzepolykondensation hergestellt werden. Zur Herstellung der erfindungsgemäßen Polyetheresteramidimide wird Trimellithsäureanhydrid und das oder die aliphatische(n) Diamin(e) in einem Verhältnis von 2:1 unter Zusatz äquimolarer Mengen an zusätzlicher Dicarbonsäure und aliphatischen Diamins gegebenenfalls unterschiedlicher Struktur unter Verwendung der anderen Inkredenzien eingesetzt. Bei Verwendung von Diimiddicarbonsäure-Einheiten zum Aufbau der Amidstrukturen beträgt das maximale Verhältnis von Trimellithsäureanhydrid zu aliphatischem Diamin 2:1,5. Der weitere Verlauf der Schmelzekondensation verläuft wie oben beschrieben.

Der Katalysator zur Veresterung kann ebenfalls direkt mit den Reaktionspartnern vorgelegt werden. Bei der Fahrweise aus den Vorprodukten ist gegebenenfalls eine Vorkondensation sinnvoll, bevor der Katalysator zugegeben wird. Es sind viele Veresterungskatalysatoren bekannt, jedoch für die Herstellung der erfindungsgemäßen Polyetheresteramidimide eignen sich besonders gut organische Titanate, wie tetra-Butyltitanat, Magnesiumacetat, Calciumstearat und/oder Dibutylzinnoxid. Die eingesetzten Mengen an Katalysator betragen ca. 0,005 bis 1 Gew.-%.

In den Reaktionsprozeß können gegebenenfalls Antioxidantien eingesetzt werden, wie die bekannten Systeme auf Basis von sterisch gehinderten Phenolen, z.B. N,N'-Hexamethylen-bis-(3,5-di-tert.-butyl-4-hydroxyhydrazimtsäureamid).

Die erfindungsgemäßen thermoplastischen Elastomere können durch typische Extrusions- oder Blasformverfahren zu medizinischen Gebrauchsartikeln, wie Blutbeutel, Katheder und intravenös einzusetzende Schläuche, verarbeitet werden. Die erfindungsgemäßen Materialien zeigen ausgezeichnete Spannungs-Dehnungs-Eigenschaften bei niedriger Härte und hervorragender Transparenz.

### Beispiele

Alle angegebenen Lösungsviskositäten wurden in Methylenchlorid bei einer Konzentration von 0,5 g Polymer/100 ml gemessen. Die thermogravimetrischen Analysen (TGA) zur Bestimmung der thermischen Beständigkeit wurden mit einem PGS 2-Gerät der Firma Perkin Elmer durchgeführt. Die Aufheizgeschwindigkeit betrug immer 20 K/min, die angegebene Temperatur zeigte den Gewichtsverlust von 1 % der Probenmasse an. Das angegebene mittlere Gewichtsmolekulargewicht M_{w} wurde durch Lichtstreuung absolut bestimmt.

### Beispiel 1

### Herstellung der Diimiddicarbonsäuren

1 Mol 4,4'-Diaminodicyclohexylmethan (trans, trans-Anteil >80 %) und 2 Mol Trimellithsäureanhydrid werden in einem Liter Dimethylformamid vorsichtig auf 160°C aufgeheizt und nach Abklingen der exothermen Reaktion mit 2 Mol Essigsäureanhydrid versetzt. Das Reaktionsgemisch wird anschließend 4 Stunden lang bei 160°C unter Rückfluß erhitzt auf 60°C abgekühlt und in das fünffache Volumen Wasser gegossen. Die ausgefallene Diimiddicarbonsäure wird abgesaugt, mit Wasser neutral gewaschen und anschließend bei 110°C getrocknet.

### Durchführung der Polymerisation

Die Reaktionsapparatur, bestehend aus einem 250 ml Einhalskolben mit Kondensationsaufsatz, Metallrührer sowie -führung und einer kühlbaren Vorlage wird dreimal evakuiert und mit Reinststickstoff belüftet. Danach werden 27,93 g (0,05 Mol) der oben beschriebenen Diimiddicarbonsäure, 29,28 g (0,03 Mol) eines Polytetrahydrofurans mit einem mittleren Molekulargewicht von 1000, 0,526 g (2,5 mMol) 4,4'-Diamino-dicyclohexylmethan sowie 18 g (0,2 Mol) 1,4-Butandiol eingebracht. Als Katalysator wurden 10 mg Butyltitanat gelöst in 1,4-Butandiol zugesetzt. Anschließend wird der Reaktionskolben in ein 200°C heißes Metallbad gesetzt und der Rührer in Betrieb genommen. Nachdem die am Anfang trübe Lösung homogen geworden ist, wird die Badtemperatur innerhalb von 2 h auf 250°C gesteigert, wobei bereits geringe Mengen eines Wasser/Diol-Gemisches abdestillieren. Anschließend reduziert man innerhalb von 30 min den Druck auf 0,4 mbar und hält die Temperatur 3 h konstant bei 250°C. Zur Vervollständigung der Reaktion wird die Temperatur für 30 min auf 260°C gesteigert und der Druck auf 0,25 mbar gesenkt. Man erhält ein transparentes lösliches Polyetheresterimidamid mit einem molaren Imid zu Amid-Struktur-Verhältnis von 20:1 und einer relativen Lösungsviskosität von ηᵣₑₗ = 1,336. Das mittlere Molekulargewicht beträgt M_{w} = 45 300. Die thermische Beständigkeit laut dynamischer TGA wurde zu 385°C bestimmt.

| Mechanische Daten: | |
|---|---|
| Zugspannung 100 % (MPa) | 5,2 |
| Zugspannung 300 % (MPa) | 6,1 |
| Zugfestigkeit (MPa) | 15,0 |
| Bruchdehnung (%) | 750 |
| Shore A | 80 |

### Beispiel 2

### Durchführung der Polymerisation

Die Reaktionsapparatur, bestehend aus einem 250 ml-Einhalskolben mit Kondensationsaufsatz, Metallrührer sowie -führung und einer kühlbaren Vorlage wird dreimal evakuiert und mit Reinstickstoff belüftet. Danach werden 11,03 g (0,0525 Mol) 4,4'-Diaminodicyclohexylmethan, 19,2 g (0,1 Mol) Trimellithsäureanhydrid, 29,28 g (0,03 Mol) eines Polytetrahydrofurans mit einem mittleren Molekulargewicht von 1000 sowie 18 g (0,2 Mol) 1,4-Butandiol eingebracht. Als Katalysator wurden 10 mg Butyltitanat gelöst in 1,4-Butandiol zugesetzt. Anschließend wird der Reaktionskolben in ein 200°C heißes Metallbad gesetzt und der Rührer in Betrieb genommen. Nachdem die am Anfang trübe Lösung homogen geworden ist, wird die Badtemperatur innerhalb von 2 h auf 250°C gesteigert, wobei bereits geringe Mengen eines Wasser/Diol-Gemisches abdestillieren. Anschließend reduziert man innerhalb von 30 min den Druck auf 0,4 mbar und hält die Temperatur 3 h konstant bei 250°C. Zur Vervollständigung der Reaktion wird die Temperatur für 30 min auf 260°C gesteigert und der Druck auf 0,25 mbar gesenkt. Man erhält ein transparentes lösliches Polyetheresterimidamid mit einem molaren Imid zu Amid-Strukturverhältnis von 20:1 und einer relativen Lösungsviskosität von ηᵣₑₗ = 1,621. Das mittlere Molekulargewicht beträgt M_{w} = 91 300. Die thermische Beständigkeit laut dynamischer TGA wurde zu 385°C bestimmt,

| Mechanische Daten: | |
|---|---|
| Zugspannung 100 % (MPa) | 5,2 |
| Zugspannung 300 % (MPa) | 6,2 |
| Zugfestigkeit (MPa) | 15,3 |
| Bruchdehnung (%) | 825 |
| Shore A | 85 |

### Beispiel 3

### Herstellung der Diimiddicarbonsäure (vgl. Beispiel 1)

### Durchführung der Polymerisation

In der in Beispiel 1 beschriebenen Reaktionsapparatur werden nach Spülung mit Reinststickstoff 25,14 g (0,045 Mol) der in Beispiel 1 beschriebenen Diimiddicarbonsäure, 1,46 g (0,01 Mol) Adipinsäure, 0,58 g (0,005 Mol) Hexamethylendiamin, 9,25 g (0,02 Mol) eines Polytetrahydrofurans mit einem mittleren Molekulargewicht von 1000 sowie 18 g (0,2 Mol) 1,4-Butandiol eingebracht. Als Katalysator wurden 10 mg Butyltitanat gelöst in 1,4-Butandiol zugesetzt. Anschließend wird der Reaktionskolben in ein 200°C heißes Metallbad gesetzt und der Rührer in Betrieb genommen. Nachdem die am Anfang trübe Lösung homogen geworden ist, wird die Badtemperatur innerhalb von 2 h auf 250°C gesteigert, wobei bereits geringe Mengen eines Wasser/Diol-Gemisches abdestillieren. Anschließend reduziert man innerhalb von 30 min den Druck auf 0,4 mbar und hält die Temperatur 3 h konstant bei 250°C. Zur Vervollständigung der Reaktion wird die Temperatur für 30 min auf 260°C gesteigert und der Druck auf 0,25 mbar gesenkt. Man erhält ein transparentes lösliches Polyetheresterimidamid mit einem molaren Imid zu Amid-Strukturverhältnis von 9:1 und einer relativen Lösungsviskosität von ηᵣₑₗ = 1,664. Das mittlere Molekulargewicht beträgt M_{w} = 116 700.

Die thermische Beständigkeit laut dynamischer TGA wurde zu 379°C bestimmt.

### Beispiel 4

### Herstellung der Diimiddicarbonsäuren

1 Mol Hexamethylendiamin und 2 Mol Trimellithsäureanhydrid werden in einem Liter Dimethylformamid vorsichtig auf 160°C aufgeheizt und nach Abklingen der exothermen Reaktion mit 2 Mol Essigsäureanhydrid versetzt. Das Reaktionsgemisch wird anschließend 4 Stunden lang bei 160°C unter Rückfluß erhitzt auf 60°C abgekühlt und in das fünffache Volumen Wasser gegossen. Die ausgefallene Diimiddicarbonsäure wird abgesaugt, mit Wasser neutral gewaschen und anschließend bei 110°C getrocknet.

### Durchführung der Polymerisation

In der in Beispiel 1 beschriebenen Reaktionsapparatur werden nach Spülung mit Reinststickstoff 23,22 g (0,05 Mol) der oben beschriebenen Diimiddicarbonsäure, 24,40 g (0,025 Mol) eines Polytetrahydrofurans mit einem mittleren Molekulargewicht von 1000, 0,22 g (2,5 mMol) Hexamethylendiamin sowie 15,22 g (0,2 Mol) 1,3-Propandiol eingebracht. Als Katalysator wurden 10 mg Butyltitanat gelöst in 0,42 ml 1,4-Butandiol zugesetzt.

Anschließend wird der Reaktionskolben in ein 200°C heißes Metallbad gesetzt und der Rührer in Betrieb genommen. Nachdem die am Anfang trübe Lösung homogen geworden ist, wird die Badtemperatur innerhalb von 2 h auf 250°C gesteigert, wobei bereits geringe Mengen eines Wasser/Diol-Gemisches abdestillieren Anschließend reduziert man innerhalb von 30 min den Druck auf 0,4 mbar und hält die Temperatur 3 h konstant bei 250°C. Zur Vervollständigung der Reaktion wird die Temperatur für 30 min auf 260°C gesteigert und der Druck auf 0,25 mbar gesenkt. Man erhält ein transparentes lösliches Polyetheresterimidamid mit einem molaren Imid zu Amid-Strukturverhältnis von 20:1 und einer relativen Lösungsviskosität von ηᵣₑₗ = 1,380. Das mittlere Molekulargewicht beträgt M_{w} = 37 900. Die thermische Beständigkeit laut TGA beträgt 365°C.

| Mechanische Daten: | |
|---|---|
| Zugspannung 100 % (MPa) | 5,8 |
| Zugspannung 300 % (MPa) | 6,6 |
| Zugfestigkeit (MPa) | 13,0 |
| Bruchdehnung (%) | 675 |
| Shore A | 90 |

### Beispiel 5

### Durchführung der Polymerisation

In der in Beispiel 1 beschriebenen Reaktionsapparatur werden nach Spülung mit Reinststickstoff 11,03 g (0,0525 Mol) 4,4'-Diamino-dicyclohexylmethan, 19,2 g (0,1 Mol) Trimellithsäureanhydrid, 24,25 g (0,025 Mol) eines Polytetrahydrofurans mit einem mittleren Molekulargewicht von 1000, 18 g (0,2 Mol) 1,4-Butandiol sowie 0,269 g (0,01 Mol) Stearylamin eingebracht. Als Katalysator wurden 10 mg Butyltitanat gelöst in 1,4-Butandiol zugesetzt. Anschließend wird der Reaktionskolben in ein 200°C heißes Metallbad gesetzt und der Rührer in Betrieb genommen. Nachdem die am Anfang trübe Lösung homogen geworden ist, wird die Badtemperatur innerhalb von 2 h auf 250°C gesteigert, wobei bereits geringe Mengen eines Wasser/Diol-Gemisches abdestillieren. Anschließend reduziert man innerhalb von 30 min den Druck auf 0,4 mbar und hält die Temperatur 3 h konstant bei 250°C. Zur Vervollständigung der Reaktion wird die Temperatur für 30 min auf 260°C gesteigert und der Druck auf 0,25 mbar gesenkt. Man erhält ein transparentes lösliches Polyetheresterimidamid mit einem molaren Imid zu Amid-Strukturverhältnis von 20:1 und einer relativen Lösungsviskosität von ηᵣₑₗ = 1,320. Das mittlere Molekulargewicht beträgt M_{w} = 41 000. Die thermische Beständigkeit laut TGA beträgt 385°C.

| Mechanische Daten: | |
|---|---|
| Zugspannung 100 % (MPa) | 5,2 |
| Zugspannung 300 % (MPa) | 6,5 |
| Zugfestigkeit (MPa) | 13,5 |
| Bruchdehnung (%) | 740 |
| Shore A | 88 |

### Beispiel 6

### Durchführung des Polymerisation

1,163 kg (5,54 Mol) 4,4'-Diamino-dicyclohexylmethan, 0,470 kg (2,77 Mol) 5-Amino-1-aminomethyl-1,3,3-trimethylcyclohexan, 3,043 kg (15,83 Mol) Trimellithsäureanhydrid, 2,884 kg (2,91 Mol) eines Polytetrahydrofurans mit einem mittleren Molekulargewicht von 1000, 1,661 kg (0,83 Mol) eines Polytetrahydrofurans mit einem mittleren Molekulargewicht von 2000 sowie 0,598 kg (4,15 Mol) 1,4-Cyclohexandimethanol und als Katalysator 1,662 g Butyltitanat gelöst in 70 ml 1,4-Butandiol werden nach Spülen mit Stickstoff in einem 20 l Autoklaven vorgelegt. Unter Eigendruck wird das Reaktionsgemisch 2 h lang bei 200°Cmit 100 U/min gerührt. Anschließend wird das Reaktionsgemisch auf 250°C aufgeheizt und 2 h mit 50 U/min gerührt. Innerhalb von einer Stunde wird Vakuum angelegt und die Temperatur bis auf 260°C gesteigert. Sobald die Rührgeschwindigkeit auf weniger als 40 U/min abgesunken ist, wird das Produkt mit Stickstoff aus dem Autoklaven gedrückt, abgesponnen und granuliert. Man erhält ein transparentes lösliches Polyetheresterimidamid mit einem molaren Imid zu Amid-Strukturverhältnis von 20:1 und einer relativen Lösungsviskosität von ηᵣₑₗ = 1,260. Das mittlere Molekulargewicht beträgt M_{w} = 28 500. Die thermische Beständigkeit laut TGA beträgt 395°C.

## Patentansprüche (Patentansprüche für folgende(n) Vertragsstaat(en): BE, CH, DE, FR, GB, IT, LI, NL)

1. Thermoplastische, elastomere und transparente Polyetheresteramidimide der Formel 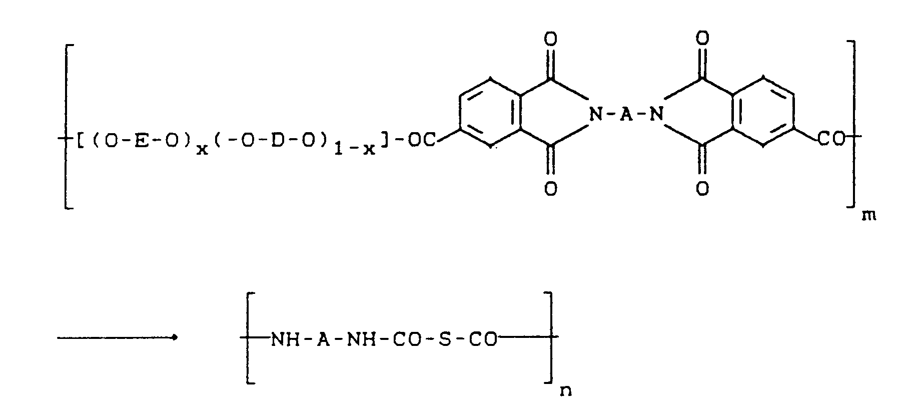 worin
A einen divalenten Rest eines aliphatischen oder cycloaliphatischen Diamins mit 1 bis 25 Kohlenstoffatomen darstellt,
E für einen divalenten Rest eines aliphatischen 1,ω-Dihydroxypolyethers mit Molekulargewichten von 400 bis 2500 g/Mol steht,
D einen divalenten Rest einer aliphatischen oder cycloaliphatischen 1,ω-Dihydroxyverbindung mit 2 bis 15 Kohlenstoffatomen bedeutet,
S für einen divalenten Rest einer aliphatischen, cycloaliphatischen oder aromatischen Dicarbonsäure mit 5 bis 43 Kohlenstoffatomen steht, mit der Maßgabe, daß x im Bereich von 0,1 bis 0,9 liegt, daß Molverhältnis von Imid-zu Amidstruktur (m:n) größer als 2:1 ist und das durch Lichtstreuung absolut bestimmte mittlere Gewichtsmolekulargewicht (M_{w}) Werte von 20 000 bis 200 000 besitzt.

2. Polyetheresteramidimide entsprechend Anspruch 1, dadurch gekennzeichnet, daß das mittlere Gewichtsmolekulargewicht (M_{w}) durch Zugabe eines niedermolekularen, monofunktionellen Kettenabbrechers mit einem Siedepunkt oberhalb 200°C aus der Klasse der Amine, Alkohole und/oder Carbonsäuren eingestellt wird.

3. Verwendung der Polyetheresteramidimide des Anspruchs 1 zur Herstellung medizinischer Gebrauchsartikel.

## Patentansprüche (Patentansprüche für folgende(n) Vertragsstaat(en): ES)

1. Verfahren zur Herstellung von thermoplastischen, elastomeren und transparenten Polyetheresteramidimiden der Formel 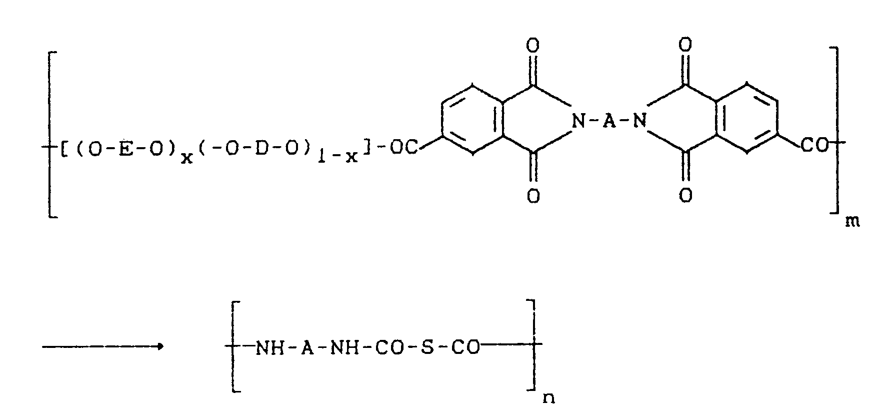 worin
A einen divalenten Rest eines aliphatischen oder cycloaliphatischen Diamins mit 1 bis 25 Kohlenstoffatomen darstellt,
E für einen divalenten Rest eines aliphatischen 1,ω-Dihydroxypolyethers mit Molekulargewichten von 400 bis 2500 g/Mol steht,
D einen divalenten Rest einer aliphatischen oder cycloaliphatischen 1,ω-Dihydroxyverbindung mit 2 bis 15 Kohlenstoffatomen bedeutet,
S für einen divalenten Rest einer aliphatischen, cycloaliphatischen oder aromatischen Dicarbonsäure mit 5 bis 43 Kohlenstoffatomen steht, mit der Maßgabe, daß x im Bereich von 0,1 bis 0,9 liegt, daß Molverhältnis von Imid-zu Amidstruktur (m:n) größer als 2:1 ist und das durch Lichtstreuung absolut bestimmte mittlere Gewichtsmolekulargewicht (M_{w}) Werte von 20 000 bis 200 000 besitzt,
wobei man eine Diimiddicarbonsäure oder die entsprechenden Vorprodukte zusammen mit dem gewünschten Anteil an 1,ω-Dihydroxypolyether, einer äquimolaren Menge an einer weiteren Carbonsäure oder der gleichen Diimiddicarbonsäure und Diamin mit einem Überschuß an 1,ω-Dihydroxyverbindung nach dem Schmelzekondensationsverfahren umsetzt.

## Claims (Claims for the following Contracting State(s): BE, CH, DE, FR, GB, IT, LI, NL)

1. Thermoplastic, elastomeric and transparent polyetherester amidimides of the formula 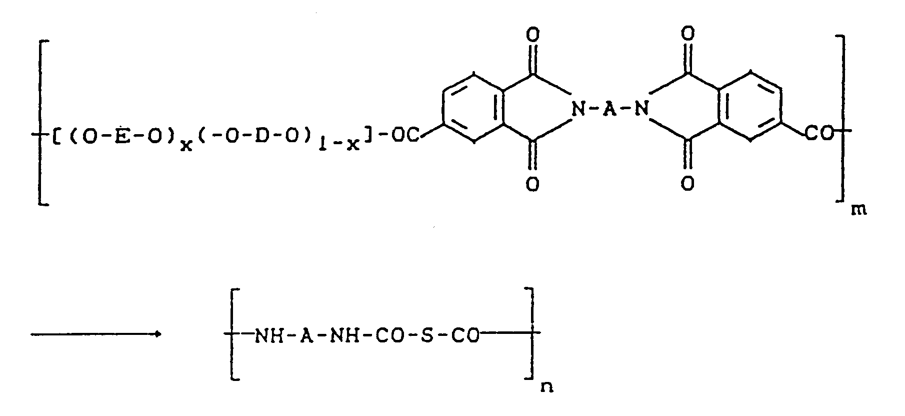 in which
A represents a divalent radical of an aliphatic or cycloaliphatic diamine having 1 to 25 carbon atoms,
E stands for a divalent radical of an aliphatic 1,ω-dihydroxypolyether having molecular weights of 400 to 2,500 g/mol,
D denotes a divalent radical of an aliphatic or cycloaliphatic 1,ω-dihydroxy compound having 2 to 15 carbon atoms,
S stands for a divalent radical of an aliphatic, cycloaliphatic or aromatic dicarboxylic acid having 5 to 43 carbon atoms, under the condition that x lies within the range 0.1 to 0.9, the molar ratio of imide to amide structure (m : n) is greater than 2 : 1 and the weight average molecular weight (M_{w}) determined absolutely by light scattering is 20,000 to 200,000.

2. Polyetherester amidimides according to Claim 1, characterised in that the weight average molecular weight (M_{w}) is adjusted by the addition of a low molecular weight, mono-functional chain terminator having a boiling point above 200°C taken from the class comprising amines, alcohols and/or carboxylic acids.

3. Use of the polyetherester amidimides of Claim 1 for the manufacture of medical articles of use.

## Claims (Claims for the following Contracting State(s): ES)

1. Process for the manufacture of thermoplastic, elastomeric and transparent polyetherester amidimides of the formula 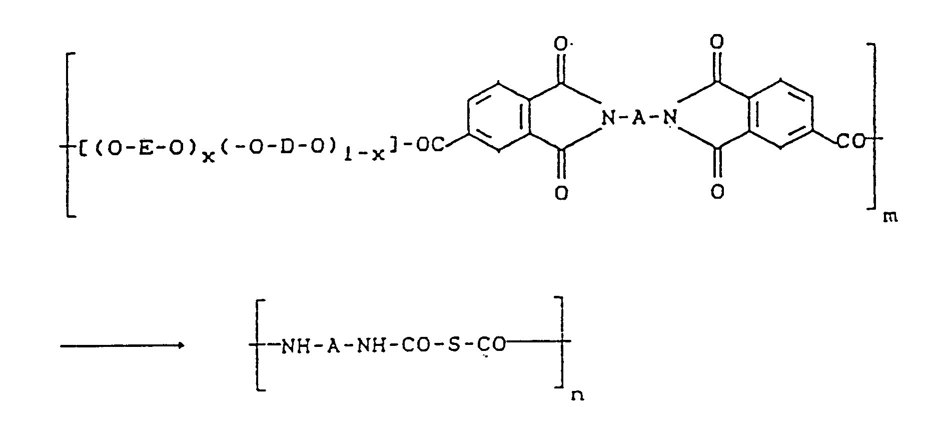 in which
A represents a divalent radical of an aliphatic or cycloaliphatic diamine having 1 to 25 carbon atoms,
E stands for a divalent radical of an aliphatic 1,ω-dihydroxypolyether having molecular weights of 400 to 2,500 g/mol,
D denotes a divalent radical of an aliphatic or cycloaliphatic 1,ω-dihydroxy compound having 2 to 15 carbon atoms,
S stands for a divalent radical of an aliphatic, cycloaliphatic or aromatic dicarboxylic acid having 5 to 43 carbon atoms, under the condition that x lies within the range 0.1 to 0.9, the molar ratio of imide to amide structure (m : n) is greater than 2 : 1 and the weight average molecular weight (M_{w}) determined absolutely by light scattering is from 20,000 to 200,000,
wherein a diimidedicarboxylic acid or the corresponding intermediates is/are reacted in the melt condensation process with the desired proportion of 1,ω-dihydroxypolyether, an equimolar quantity of a further carboxylic acid or of the same diimidedicarboxylic acid and diamine with an excess of 1,ω-dihydroxy compound.

## Revendications (Revendications pour l'(les) Etat(s) contractant(s) suivant(s): BE, CH, DE, FR, GB, IT, LI, NL)

1. Polyétheresteramidimides thermoplastiques, élastomères et transparents, répondant à la formule 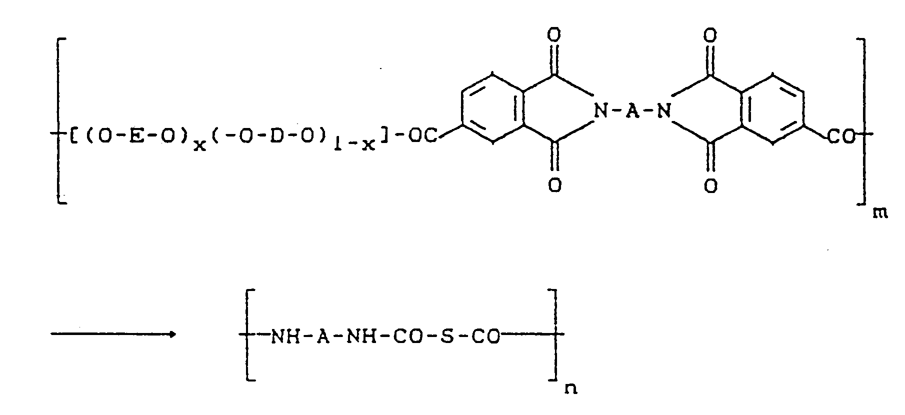 dans laquelle
A représente un radical divalent d'une diamine aliphatique ou cycloaliphatique contenant de 1 à 25 atomes de carbone,
E représente un radical divalent d'un 1,ω-dihydroxypolyéther aliphatique ayant des poids moléculaires de 400 à 2500 g/mole,
D représente un radical divalent d'un composé 1,ω-dihydroxylé aliphatique ou cycloaliphatique contenant de 2 à 15 atomes de carbone,
S représente un radical divalent d'un acide dicarboxylique aliphatique, cycloaliphatique ou aromatique contenant de 5 à 43 atomes de carbone, avec cette mesure que x se situe dans le domaine de 0,1 à 0,9, que le rapport molaire de la structure imide à la structure amide (m:n) est supérieur à 2:1 et que le poids moléculaire moyen en poids (M_{w}), déterminé de manière absolue par dispersion de la lumière, possède des valeurs de 20 000 à 200 000.

2. Polyétheresteramidimides correspondant à la revendication 1, caractérisés en ce qu'on règle le poids moléculaire moyen en poids (M_{w}) par addition d'un agent de rupture de chaînes monofonctionnel à bas poids moléculaire, ayant un point d'ébullition supérieur à 200°C, faisant partie de la classe des amines, des alcools et/ou des acides carboxyliques.

3. Utilisation des polyétheresteramidimides selon la revendication 1, pour la préparation d'articles à usage médical.

## Revendications (Revendications pour l'(les) Etat(s) contractant(s) suivant(s): ES)

1. Procédé pour la préparation de polyétheresteramidimides thermoplastiques, élastomères et transparents, répondant à la formule 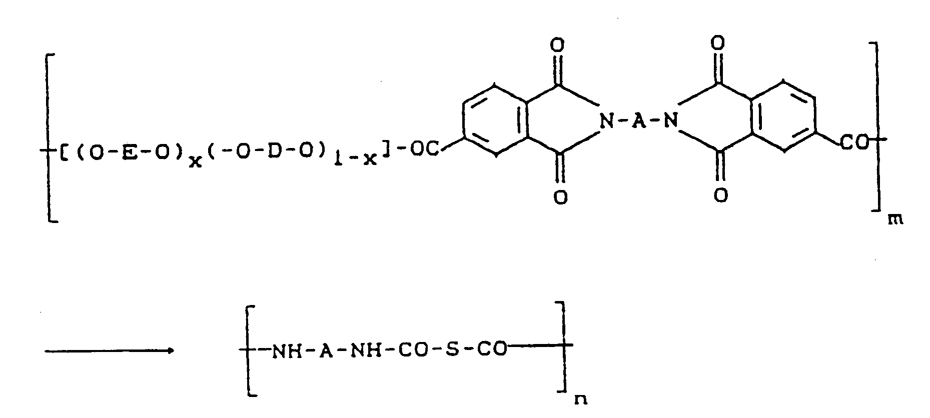 dans laquelle
A représente un radical divalent d'une diamine aliphatique ou cycloaliphatique contenant de 1 à 25 atomes de carbone,
E représente un radical divalent d'un 1,ω-dihydroxypolyéther aliphatique ayant des poids moléculaires de 400 à 2500 g/mole,
D représente un radical divalent d'un composé 1,ω-dihydroxylé aliphatique ou cycloaliphatique contenant de 2 à 15 atomes de carbone,
S représente un radical divalent d'un acide dicarboxylique aliphatique, cycloaliphatique ou aromatique contenant de 5 à 43 atomes de carbone, avec cette mesure que x se situe dans le domaine de 0,1 à 0,9, que le rapport molaire de la structure imide à la structure amide (m:n) est supérieur à 2:1 et que le poids moléculaire moyen en poids (M_{w}), déterminé de manière absolue par dispersion de la lumière, possède des valeurs de 20 000 à 200 000,
dans lequel on fait réagir un acide diimidedicarboxylique ou les précurseurs correspondants conjointement avec la fraction désirée en 1,ω-dihydroxypolyéther, une quantité équimolaire d'un autre acide carboxylique ou du même acide diimidedicarboxylique et d'une diamine avec un excès de composé 1,ω-dihydroxylé conformément au procédé de condensation par fusion.
